# EUROPÄISCHE PATENTSCHRIFT

(11) **EP 1 996 675 B1**
(45) Veröffentlichungstag und Bekanntmachung des Hinweises auf die Patenterteilung: **17.10.2018**
(21) Anmeldenummer: 07703127.6
(22) Anmeldetag: 30.01.2007
(51) Int. Cl.: C10B 25/16, C10B 25/24, F16J 15/14

(54) **VERFAHREN UND VORRICHTUNG ZUM ABDICHTEN EINES MIT EINEM DECKEL VERSCHLOSSENEN FÜLLLOCHS EINES KOKSOFENS**
METHOD AND MEANS OF SEALING A COKE OVEN CHARGING HOLE CLOSED WITH A LID
PROCEDE ET DISPOSITIF POUR ETANCHEIFIER UN TROU DE REMPLISSAGE D'UN FOUR A COKE FERME PAR UN COUVERCLE

(30) Priorität: 09.03.2006 DE 102006011337
(43) Veröffentlichungstag der Anmeldung: 03.12.2008
(73) Patentinhaber: Kurita Water Industries Ltd., Nakano-ku, Tokyo 164-0001 (JP); ArcelorMittal Bremen GmbH, 28237 Bremen (DE)
(72) Erfinder: URSCHEY, Michael, 44143 Dortmund (DE); LEPPER, Gerd, 45277 Essen (DE); STRUNK, Joachim, 46240 Bottrop (DE); ROMMEL, Ulrich, 44805 Bochum (DE); KRAUSE, Hans-Joachim, 45897 Gelsenkirchen (DE); LINDNER, Klaus-Dieter, 45968 Gladbeck (DE)
(74) Vertreter: Reitstötter Kinzebach
(86) Internationale Anmeldenummer: PCT/EP2007/000772
(87) Internationale Veröffentlichungsnummer: WO 2007/101515

(56) Entgegenhaltungen:
- EP-A- 1 308 495
- DE-C1- 19 853 761
- JP-A- S5 027 801

## Beschreibung

Die vorliegende Erfindung betrifft ein Verfahren und eine Vorrichtung zum Abdichten eines mit einem Deckel verschlossenen Fülllochs an einem Koksofen. Hierbei wird der Ringspalt zwischen dem Deckel und dem Fülllochrahmen mit einer Abdichtmasse vergossen, die nach dem Gießvorgang aushärtet.

Bei modernen Koksöfen werden die Spalträume an den nach der Kohlefüllung mit Deckeln verschlossenen Fülllöchern mit einer Abdichtmasse vergossen. Hierdurch werden umweltschädliche Emissionen während des Verkokungsprozesses verhindert. Als Abdichtmasse werden wässrige Suspensionen verwendet, die nach dem Aushärten eine feste Abdichtung zwischen dem Deckel und dem Fülllochrahmen bilden. Die Abdichtmasse kann nach dem Aufsetzen des Deckels manuell in den Ringspalt zwischen dem Deckel und dem Fülllochrahmen eingegossen werden. Dieser zeitaufwendige manuelle Prozess ist bei modernen Koksöfen automatisiert. Für das Ausbringen der Abdichtmasse können Gießvorrichtungen eingesetzt werden, die auf dem Kohlefüllwagen installiert sind. Sie können von Hand oder automatisch betätigt werden. Die Gießvorrichtungen weisen mit Absperrarmaturen versehene Zulaufleitungen zu den Übergabebereichen oberhalb der abzudichtenden Fülllochdeckel auf.

In der Praxis kommt es immer wieder zu Betriebsstörungen durch Ablagerungen der Abdichtmasse an den Innenflächen des Leitungssystems sowie der Armaturen. Die bekannten Gießvorrichtungen bedürfen einer intensiven Wartung, um eine ordnungsgemäße Zuführung der Abdichtmasse zu den zu verschließenden Ringspalten zu gewährleisten. Ein weiteres Problem bildet eine betriebssichere und genaue Dosierung der Abdichtmasse. Sowohl eine Unterdosierung als auch eine Überdosierung muss vermieden werden. Unterdosierung führt zu einer mangelhaften Abdichtung, Überdosierung zu Verschmutzungen, die arbeitsintensiv manuell entfernt werden müssen.

Ein automatisiertes Verfahren zum Abdichten eines mit einem Deckel verschlossenen Fülllochs an einem Koksofen ist in DE-C-198 53 761 beschrieben. Gemäß dieser Offenbarung wird eine Optimierung des Abdichtvorgangs dadurch versucht, dass aus einem auf einem Kohlefüllwagen mitgeführten Vorratsbehälter eine für den abzudichtenden Ringspalt vorher festgelegte Menge an Abdichtmasse entnommen und unter Druck einem ringförmigen Verteiler zugeführt wird, der oberhalb des Ringspaltes positioniert worden ist. Nach Abgabe der vorgegebenen Abdichtmassenmenge wird das an den Vorratsbehälter austrittseitig anschließende Leitungssystem bis zum Verteiler mit Wasser gespült. Hierdurch sollen Ablagerungen im Leitungssystem vermieden werden. Als Abdichtmasse wird vorzugsweise eine wässrige Suspension mit pastöser Konsistenz eingesetzt.

JP-S50 27801 offenbart eine Vorrichtung zum Abdichten einer mit einem Deckel verschlossenen Füllöffnung an einem Koksofen, wobei erst Mörtel über eine halbkreisförmige Einspritzdüse in einen kreisbogenförmigen Teil des Ringspalts zwischen Füllöffnung und Deckel eingebracht und anschließend der Deckel eingedreht wird.

Die vorliegende Erfindung vereinfacht das automatische Eingießen der Abdichtmasse in den Ringspalt. Das häufige Spülen des Leitungssystems soll vermieden werden.

Die vorliegende Erfindung betrifft ein Verfahren zum Abdichten eines mit einem Deckel verschlossenen Fülllochs eines Koksofens, wobei der Ringspalt zwischen dem Deckel und einem Fülllochrahmen mit einer Abdichtmasse vergossen wird, die nach dem Gießvorgang aushärtet und wobei einem Vorratsbehälter eine vorher festgelegte Menge an Abdichtmasse entnommen und mit Hilfe einer Dosiereinrichtung in den Ringspalt eingegossen wird, dadurch gekennzeichnet, dass die Dosiereinrichtung eine Dosierspitze aufweist, die über einer ausgewählten Stelle des Ringspalts positioniert wird und die während des Vergießens der Abdichtmasse an dieser ausgewählten Stelle verbleibt, und dass das Vergießen der Abdichtmasse gleichzeitig mit dem Eindrehen des Deckels erfolgt, wobei die Abdichtmasse durch die Drehung des Deckels über den Ringspalt verteilt wird, und wobei die Abdichtmasse Wasser, echt oder kolloid gelöste Silicate sowie gelöste oder kolloid dispergierte organische Polymere enthält und bei 20 °C eine Viskosität, gemessen nach Brookfield mit Spindel Nr. 2 bei 30 Umdrehungen pro Minute, im Bereich von 200 bis 5000 mPa·s aufweist. Dabei können auch mehrere, beispielsweise zwei oder drei Dosierspitzen vorgesehen werden, die über demselben Ringspalt an verschiedenen Stellen positioniert werden.

Vorzugsweise wird die Dosierspitze programmgesteuert über einer ausgewählten Stelle des Ringspalts positioniert. Erfindungsgemäß verbleibt sie während des Vergießens der Abdichtmasse an dieser ausgewählten Stelle. Hiermit ist gemeint, dass die Dosierspitze während des Vergießens der Abdichtmasse nicht mit Absicht bewegt wird. Aufgrund von Vibrationen ist ein geringfügiges Wackeln der Dosierspitze möglich. Dies ist jedoch unschädlich, so lange die Dosierspitze über dem Ringspalt positioniert bleibt.

Ein aufwendiger Dosierring wie in DE 198 53 761 beschrieben, ist gemäß dem erfindungsgemäßen Verfahren also nicht erforderlich. Die im Vergleich zu dem genannten Dokument vereinfachte Aufgabeeinrichtung macht das System betriebssicherer und weniger störanfällig. Erfindungsgemäß ist es weiterhin nicht erforderlich, dass die Dosierspitze während des Vergießvorgangs entlang des Ringspalts bewegt wird. Dies verringert Fehlermöglichkeiten und trägt ebenfalls zur erhöhten Betriebssicherheit des Verfahrens bei. Das Verteilen der Abdichtmasse entlang des Ringspalts erfolgt erfindungsgemäß dadurch, dass das Vergießen der Abdichtmasse gleichzeitig mit dem Eindrehen des Deckels in das Füllloch erfolgt. Durch die Drehung des Deckels wird die Abdichtmasse über den Ringspalt verteilt. Dadurch, dass das Eingießen der Abdicht-masse in den Ringspalt synchron mit dem Drehen des Deckels erfolgt, wird die Abdichtmasse im Ringspalt zuverlässig gleichmäßig verteilt. Dies verringert die Gefahr einer ungleichmäßigen und lückenhaften Abdichtung. Durch das Drehen des Fülllochdeckels während des Ein-gießens der Abdichtmasse wirken sich Verkrustungen am Fülllochdeckel und/oder am Fülllochrahmen weniger negativ auf den Abdichtvorgang aus als es beim Vergießen bei stillstehendem Fülllochdeckel der Fall wäre. Zum einen können derartige Verkrustungen, die beispielsweise von alter, angebackener Abdichtmasse herrühren können, bei der Drehung des durch frische Abdichtmasse befeuchteten Deckelrands abgeschert und in die frische Abdichtmasse eingebettet werden. Zum anderen behindern Verkrustungen das Verteilen der Abdichtmasse im Ringspalt nicht, da sie diese beim Eindrehen des Deckels mitnehmen und im Ringspalt verteilen. Das erfindungsgemäße Verfahren hat daher den zusätzlichen Vorteil, dass eine Reinigung von Fülllochdeckel und Fülllochrahmen vor dem Einsetzen und dem Abdichten des Deckels seltener und/oder weniger gründlich durchgeführt werden muss als bei herkömmlichen Verfahren.

Die vorher festgelegte Menge an Abdichtmasse, die in dem erfindungsgemäßen Verfahren für eine vollständige Abdichtung des Ringspalts erforderlich ist, kann durch Vorversuche bestimmt werden. Die pro Füllloch benötigte und daher vorher festgelegte Menge an Abdichtmasse liegt bei üblichen Fülllochdurchmessern im Bereich von etwa 100 bis etwa 300 ml. Bei ungewöhnlich kleinen oder ungewöhnlich großen Fülllöchern kann die erforderliche und vorher festzulegende Menge an Abdichtmasse auch darunter oder darüber liegen. Die Zeitdauer des Vergießens der vorher festgelegten Menge an Abdichtmasse in den Ringspalt entspricht vorzugsweise im wesentlichen der Zeit, in der der Deckel eingedreht wird. Diese Zeitdauer liegt üblicherweise im Bereich von etwa 5 bis etwa 15 Sekunden.

Die gesamte Vorrichtung, die die Abdichtmasse aufnimmt und über den Fülllöchern ausbringt, ist vorzugsweise auf dem Kohlefüllwagen montiert. Sie befindet sich dann automatisch über oder in der Nähe desjenigen Koksofens der Koksofenbatterie, der durch den Kohlefüllwagen gerade mit frischer Kohle gefüllt wurde. Die Einrichtung zur Aufnahme und zum Ausbringen der Abdichtmasse umfasst vorzugsweise einen Vorratsbehälter für die Abdichtmasse, eine Pumpe und ein Leitungssystem zum Fördern der Abdichtmasse und die Dosierspitze, aus der die Abdichtmasse über dem Ringspalt austritt. Dabei kann ein Leitungssystem mit einer einzigen Pumpe und einer einzigen Dosierspitze vorgesehen werden. In diesem Fall werden die einzelnen Fülllöcher eines Koksofens nacheinander vergossen, wobei die Dosierspitze vor Beginn des Dosierens jeweils über dem entsprechenden Füllloch positioniert wird. Bei dieser Ausführungsform können die einzelnen Fülllöcher nur nacheinander mit dem Deckel verschlossen und abgedichtet werden. Wegen des hiermit verbundenen Zeitaufwands ist diese Ausführungsform ungünstig.

Günstiger ist es, für jedes Füllloch des Koksofens jeweils mindestens eine Dosierspitze vorzusehen. Hierdurch können alle Fülllöcher desselben Koksofens gleichzeitig verschlossen und abgedichtet werden. In dieser Verfahrensform kann eine einzige Pumpe vorgesehen werden, die über eine Sammelleitung alle Dosierspitzen mit Abdichtmasse versorgt. Die vorher festgelegte Menge an Abdichtmasse pro Füllloch wird dann über ein gesteuertes Dosierventil eingebracht. Zur Kontrolle und/oder zur Steuerung können Durchflussmesser vorgesehen werden. Steuertechnisch günstiger und betriebssicherer ist es jedoch, für jede Dosierspitze eine eigene Pumpe vorzusehen und durch entsprechendes Ansteuern der Pumpe dafür zu sorgen, dass genau die vorher festgelegte Menge an Abdichtmasse zur jeweiligen Dosierspitze gefördert wird.

Unabhängig von der gewählten Ausführungsform ist es vorteilhaft, zwischen der Pumpe und der Dosierspitze ein Rückschlagventil vorzusehen. Vorzugsweise befindet sich dieses in Fließrichtung der Masse gesehen unmittelbar vor der Dosierspitze. Zur erhöhten Betriebssicherheit sollte ein einstellbares Rückschlagventil verwendet werden. Die Dosierspitzen selbst, die beispielsweise einfache Kunststoff- oder Metallrohre darstellen können, sollten möglichst kurz sein und eine Länge von 2 bis 20 cm, vorzugsweise von 5 bis 10 cm aufweisen. Der Durchmesser an der Austrittsöffnung liegt im Bereich von 1 bis 10 mm. Vorzugsweise sind die Dosierspitzen so ausgebildet, dass man sie direkt in das Rückschlagventil einschrauben oder einstecken kann. Im Falle von Verstopfungen sind sie dann leicht auszutauschen.

Eine bevorzugte Ausführungsform des erfindungsgemäßen Verfahrens besteht also darin, dass die vorher festgelegte Menge an Abdichtmasse dem Vorratsbehälter mit Hilfe einer gesteuerten Pumpe entnommen und durch ein Leitungssystem zur Dosierspitze gefördert wird, wobei zwischen der Pumpe und der Dosierspitze ein Rückschlagventil vorgesehen ist. Die steuerbare Pumpe ist vorzugsweise eine Verdrängerpumpe, beispielsweise eine Zahnradpumpe.

Es sind jedoch auch Ausführungsformen des erfindungsgemäßen Verfahrens möglich, bei denen auf eine Pumpe verzichtet wird. In diesem Fall kann man vorsehen, dass die Abdichtmasse allein durch Schwerkraft zur Dosierspitze befördert wird. Alternativ hierzu oder zusätzlich kann der Vorratsbehälter oder ein hieran angeschlossener Arbeitsbehälter als Druckbehälter ausgelegt sein. Die Abdicht-masse wird dann unter dem Einfluss des angelegten Drucks, der beispielsweise durch Pressluft aufgebracht werden kann, gefördert. In diesem Fall kann man durch gesteuerte Ventile dafür sorgen, dass die vorher festgelegte Menge an Abdichtmasse pro Füllloch abgegeben wird. Diese Verfahrensalternative ist jedoch weniger betriebssicher als die Förderung der Abdichtmasse mittels einer gesteuerten Pumpe.

Um Eintrocknungen zu vermeiden, ist es empfehlenswert, dass der Produktbehälter bis auf eine kleine Lüftungsöffnung verschlossen ist. Ebenso soll das gesamte Leitungssystem möglichst geschlossen sein, um ein Eintrocknen des Produktes zu verhindern. Trotz Vorsehen von Förderpumpen ist es empfehlenswert, dass die Leitungen vom Produkttank bis zu den Dosierspitzen ein kontinuierliches Gefälle aufweisen. Dies gewährleistet konstante Druckverhältnisse. Weiterhin ist es möglich und je nach klimatischen Bedingungen bevorzugt, die Vorrichtung, die die Abdichtmasse aufnimmt und ausbringt, zumindest teilweise und insbesondere vollständig beheizbar auszulegen. Hierdurch kann bei Arbeitstemperaturen unterhalb des Gefrierpunktes von Wasser ein Einfrieren der Abdichtmasse in der Anlage verhindert werden. Eine teilweise oder vollständige Isolierung von Behälter und Leitungssystem bis zum Rückschlagventil kann zusätzlich oder alleine ohne Beheizung ebenfalls sehr sinnvoll sein.

Die Zeitdauer, in der die Abdichtmasse in den Ringspalt eines Fülllochs eingebracht wird, wählt man vorzugsweise im wesentlichen genau so lang wie die Zeitdauer, die zum Eindrehen des Fülllochdeckels benötigt wird. Man strebt also an, mit dem Einbringen der Abdichtmasse dann zu beginnen, wenn das Eindrehen des Deckels beginnt, und damit zu enden, wenn das Eindrehen des Deckels abgeschlossen ist. Bei modernen Koksöfen werden die Fülllochdeckel durch einen Deckeldreher automatisch eingedreht, der sich am Kohlefüllwagen befindet. Die Steuereinrichtung für den Deckeldreher wird vorteilhafterweise mit der Steuerung für die Pumpe so verbunden, dass das Startsignal für die Dosierung der Abdichtmasse 1 bis 6 Sekunden, vorzugsweise 3 bis 4 Sekunden vor dem Zeitpunkt, an dem das Eindrehen des Fülllochdeckels beginnt, an die Pumpe gegeben wird.

Durch dieses zeitversetzte Ansteuern der Pumpe wird gewährleistet, dass sich im Leitungssystem der erforderliche Druck aufbaut, um beim Beginn der Deckeldrehung sofort mit dem Ausbringen der Abdichtmasse zu beginnen. Zeitlich verknüpft mit dem Ende der Deckeldrehung wird die Dosierpumpe abgeschaltet. Da bei dieser Verfahrensweise die Zeitspanne, in der die Dosierpumpe fördert, an die Zeitdauer für das Eindrehen des Fülllochdeckels gekoppelt ist, lässt sich die auszubringende Menge an Abdichtmasse nicht über die Förderdauer steuern. Die Mengenregelung erfolgt stattdessen dadurch, dass die Fördermenge der Pumpe pro Zeitintervall entsprechend eingestellt wird.

Wie vorstehend bereits erläutert, wird vorzugsweise für jedes Füllloch des Koksofens jeweils eine eigene Dosierspitze vorgesehen. Dabei ist jeder Dosierspitze vorzugsweise eine eigene Dosierpumpe zugeordnet. Allerdings sind auch andere Kombinationen z. B. 1 Pumpe für je 2 Fülllöcher / Dosierspitzen möglich und u. U. sinnvoll.

Im erfindungsgemäßen Verfahren wird vorzugsweise eine Abdichtmasse eingesetzt, die bei 20 °C eine Dichte im Bereich von 1,05 bis 1,5, vorzugsweise von 1,05 bis 1,3 g/cm³ aufweist. Die Viskosität der Abdichtmasse soll zum einen so eingestellt sein, dass sie sich noch gut durch die Dosierpumpe fördern und durch das Drehen des Fülllochdeckels im Ringspalt verteilen lässt. Andererseits darf die Viskosität nicht so gering sein, dass die Abdichtmasse, bevor sie aufgrund der Hitze im Koksofen erhärtet, aus dem Ringspalt ausläuft. Daher wird eine Abdichtmasse eingesetzt, die bei 20 °C eine Viskosität, gemessen nach Brookfield mit Spindel Nr. 2 bei 30 Umdrehungen pro Minute, im Bereich von etwa 200 bis etwa 5 000 mPas, vorzugsweise im Bereich von 300 bis 3 000 mPas aufweist.

Im erfindungsgemäßen Verfahren können, unter Beachtung der vorstehend genannten bevorzugten Kenngrößen der Abdichtmasse, Suspensionen bzw. Auf-schlämmungen verwendet werden, die im Stand der Technik zur Abdichtung von Fülllochdeckeln von Koksöfen bekannt sind. Beispielsweise können diese auf wässrigen Dispersionen oder Lösungen von Silicaten ("Wasserglas") basieren. Außerdem können sie wässrige Auf-schlämmungen von pulverisierten Tonen oder Feuerfest-Materialien wie beispielsweise Metalloxiden darstellen. Auch Gips-Suspensionen sind für diesen Verwendungszweck bekannt. Jedoch werden im erfindungsgemäßen Verfahren vorzugsweise Abdichtmassen eingesetzt, die im wesentlichen keine Partikel einer solchen Größe enthalten, dass sie ein 100 µm-Filter passieren können. Besonders bevorzugt ist es, dass die Abdichtmasse im wesentlichen keine Partikel einer solchen Größe enthält, dass sie ein 50 µm-Filter passieren können. Die Verwendung derartiger Abdichtmittel verringert die Gefahr von Verstopfungen in den Dosierspitzen oder im Leitungssystem. Ebenso werden Verschleißerscheinungen an Dosierpumpen, Rückschlagventilen und ähnlichen mechanischen Bauteilen verringert.

Die Abdichtmasse für das erfindungsgemäße Verfahren enthält Wasser, echt oder kolloid gelöste Silicate sowie gelöste oder kolloid dispergierte organische Polymere. Durch die Anwesenheit der organischen Polymere werden die Fließeigenschaften der Abdichtmasse und deren Verhalten beim und nach dem Verfestigen positiv beeinflusst. Für das erfindungsgemäße Verfahren optimierte Abdichtmassen sind von der Mit-Anmelderin HENKEL KGaA unter der Produktbezeichnung P3-ferrosolf® 8989 und P3-ferrosolf® 8989-H erhältlich.

Die vorliegende Erfindung umfasst weiterhin eine Vorrichtung, die so ausgestaltet ist, dass mit Ihrer Hilfe eine bevorzugte Ausführungsform des vorstehend beschriebenen Verfahrens ausgeführt werden kann. Diese Vorrichtung enthält mindestens einen Vorratsbehälter für die Abdichtmasse, mindestens eine Pumpe und ein Leitungssystem zum Fördern der Abdichtmasse und mindestens eine Dosierspitze, aus der die Abdichtmasse über dem Ringspalt austritt, wobei die Dosierspitze eine Länge von 2 bis 20 cm, vorzugsweise von 5 bis 10 cm aufweist und an ihrem an das Leitungssystem angeschlossenen Ende ein Rückschlagventil aufweist. Die Dosierspitze kann beispielsweise ein Kunststoff- oder Metallrohr darstellen. Der Durchmesser an der Austrittsöffnung liegt im Bereich von 1 bis 10 mm. Bei dieser Ausgestaltung ist die Menge an Abdichtmasse, die nach Abschalten der Pumpe und Schließen des Rückschlagventils noch unkontrolliert ausläuft, möglichst gering. Vorzugsweise enthält die Vorrichtung pro Füllloch eines Koksofens je eine Pumpe und mindestens eine Dosierspitze mit Rückschlagventil und Leitungssystem. Es können auch mehrere Dosierspitzen, beispielsweise zwei oder drei, pro Füllloch vorgesehen werden. Die Pumpe ist vorzugsweise eine Verdrängerpumpe, beispielsweise eine Zahnradpumpe.

Zumindest der Vorratsbehälter und vorzugsweise auch die Dosierspitzen bestehen vorzugsweise aus Edelstahl, beispielsweise aus dem Werkstoff 1.4571. Der Vorratsbehälter weist vorzugsweise eine Einrichtung zur Füllstandskontrolle auf. Diese Einrichtung kann so mit der Pumpe verschaltet werden, dass beim Unterschreiten eines vorgewählten Mindestfüllstandes die Pumpe nicht mehr anläuft.

Das Rückschlagventil ist vorzugsweise einstellbar. Weiterhin ist es bevorzugt, dass die Dosierspitze in das Rückschlagventil auswechselbar eingesteckt oder eingeschraubt ist. Sie kann dann bei Verstopfung oder Verschleiß rasch ausgetauscht werden.

Vorzugsweise ist im Einlauf des Vorratsbehälters und/oder vor der Pumpe mindestens ein Partikelfilter mit einer Porengröße von nicht mehr als 100 µm, vorzugsweise von nicht mehr als 50 µm eingebaut. Insbesondere können mindestens zwei Partikelfilter vorgesehen werden, die manuell oder automatisch umschaltbar sind. Bei Verstopfung eines Filters kann dann rasch auf einen anderen Filter umgeschaltet werden. Um Verstopfungen erkennen zu können, sieht man vorzugsweise eine Einrichtung zur Differenzdruckmessung an dem Partikelfilter vor.

Zumindest der Vorratsbehälter, vorzugsweise auch das Leitungssystem sollte zumindest teilweise beheizbar sein, um im Winter ein Einfrieren der Abdichtmasse zu verhindern. Hierzu können Vorratsbehälter und Leitungssystem beispielsweise zumindest teilweise mit einem (vorzugsweise selbstregelnden) Heizband umwickelt und zusätzlich isoliert sein.

Damit die Dosierspitze über dem Füllloch positioniert werden kann, sollte das Leitungssystem zumindest in Teilen beweglich oder flexibel ausgebildet sein. Dies ist beispielsweise dadurch möglich, dass das Leitungssystem zumindest teilweise aus einem flexiblen Gummi- oder Kunststoffschlauch oder einem metallenen Wellschlauch, bevorzugt mit glattem Kunststoffinliner besteht.

Die beschriebene Vorrichtung ist vorzugsweise auf einem Kohlefüllwagen montiert, so dass sie zu den einzelnen Koksöfen einer Koksofenbatterie mittransportiert werden kann. Sie zeigt ihre Vorteile insbesondere dann, wenn der Kohlefüllwagen zumindest eine Einrichtung zum maschinellen Eindrehen des Fülllochdeckels ("Deckeldreher") aufweist. Der Deckeldreher wird bei modernen Koksöfen durch eine Steuereinrichtung über ein elektrisches Leitungssystem automatisch angesteuert. In diesem Fall verbindet man diese Steuereinrichtung (z. B. eine speicherprogrammierbare Steuerung - SPS) vorzugsweise durch ein elektrisches Leitungssystem so mit der Pumpe, dass die Steuereinrichtung Steuersignale an die Pumpe zum Fördern der Abdichtmasse geben kann. Hierdurch können die Steuersignale für die Pumpe zeitlich mit den Steuersignalen für den Deckeldreher korreliert werden. Dies wurde weiter oben bei der Beschreibung des Verfahrens näher ausgeführt.

Bei der erfindungsgemäßen Einrichtung ist die Menge an Abdichtmasse, die nach Abschalten der Pumpe noch aus der Dosierspitze ausläuft, minimal. Diejenige Menge an Abdichtmasse, die sich nach dem Abschalten der Pumpe im Leitungssystem zwischen Pumpe und Rückschlagventil befindet, bleibt verwendungsbereit und kann zum Abdichten eines weiteren Fülllochdeckels verwendet werden. Es ist nicht erforderlich und auch nicht wünschenswert, das Leitungssystem nach dem Ausbringen der Abdichtmasse auszublasen und/oder zu spülen. Dies verhindert Verschmutzungen und unnötigen Verbrauch an Abdichtmasse.

## Patentansprüche

1. Verfahren zum Abdichten eines mit einem Deckel verschlossenen Fülllochs eines Koksofens, wobei der Ringspalt zwischen dem Deckel und einem Fülllochrahmen mit einer Abdichtmasse vergossen wird, die nach dem Gießvorgang aushärtet und wobei einem Vorratsbehälter eine vorher festgelegte Menge an Abdichtmasse entnommen und mit Hilfe einer Dosiereinrichtung in den Ringspalt eingegossen wird, **dadurch gekennzeichnet, dass** die Dosiereinrichtung eine Dosierspitze aufweist, die über einer ausgewählten Stelle des Ringspalts positioniert wird und die während des Vergießens der Abdichtmasse an dieser ausgewählten Stelle verbleibt, und dass das Vergießen der Abdichtmasse gleichzeitig mit dem Eindrehen des Deckels erfolgt, wobei die Abdichtmasse durch die Drehung des Deckels über den Ringspalt verteilt wird, und wobei die Abdichtmasse Wasser, echt oder kolloid gelöste Silicate sowie gelöste oder kolloid dispergierte organische Polymere enthält und bei 20 °C eine Viskosität, gemessen nach Brookfield mit Spindel Nr. 2 bei 30 Umdrehungen pro Minute, im Bereich von 200 bis 5000 mPa·s aufweist.

2. Verfahren nach Anspruch 1, **dadurch gekennzeichnet, dass** die Zeitdauer des Vergießens der vorher festgelegten Menge an Abdichtmasse in den Ringspalt im Bereich von 5 bis 15 Sekunden liegt.

3. Verfahren nach einem oder beiden der Ansprüche 1 und 2, **dadurch gekennzeichnet, dass** die vorher festgelegte Menge an Abdichtmasse pro Füllloch im Bereich von 100 bis 300 ml liegt.

4. Verfahren nach einem oder mehreren der Ansprüche 1 bis 3, **dadurch gekennzeichnet, dass** die vorher festgelegte Menge an Abdichtmasse dem Vorratsbehälter mit Hilfe einer gesteuerten Pumpe entnommen und durch ein Leitungssystem zur Dosierspitze gefördert wird, wobei zwischen der Pumpe und der Dosierspitze ein Rückschlagventil vorgesehen ist.

5. Verfahren nach Anspruch 4, **dadurch gekennzeichnet, dass** das Startsignal für die Dosierung 1 bis 6 Sekunden, vorzugsweise 3 bis 4 Sekunden vor dem Zeitpunkt, an dem das Eindrehen des Fülllochdeckels beginnt, an die Pumpe gegeben wird.

6. Verfahren nach einem oder beiden der Ansprüche 4 und 5, **dadurch gekennzeichnet, dass** für jedes Füllloch des Koksofens jeweils mindestens eine Dosierspitze vorgesehen ist.

7. Verfahren nach einem oder mehreren der Ansprüche 1 bis 6, **dadurch gekennzeichnet, dass** die Abdichtmasse bei 20 °C eine Dichte im Bereich von 1,05 bis 1,5 g/cm³ aufweist.

8. Verfahren nach einem oder mehreren der Ansprüche 1 bis 7, **dadurch gekennzeichnet, dass** die Abdichtmasse bei 20 °C eine Viskosität, gemessen nach Brookfield mit Spindel Nr. 2 bei 30 Umdrehungen pro Minute, im Bereich von 300 bis 3000 mPa·s aufweist.

9. Verfahren nach einem oder mehreren der Ansprüche 1 bis 8, **dadurch gekennzeichnet, dass** die Abdichtmasse im wesentlichen keine Partikel einer solchen Größe enthält, dass sie ein 100 µm-Filter passieren können.

10. Verfahren nach Anspruch 9, **dadurch gekennzeichnet, dass** im Einlauf des Vorratsbehälters und/oder vor der Pumpe ein Partikelfilter vorgesehen ist.

11. Vorrichtung zur Durchführung des Verfahrens nach einem oder mehreren der Ansprüche 1 bis 10, enthaltend einen Vorratsbehälter für die Abdichtmasse, mindestens eine Pumpe und ein Leitungssystem zum Fördern der Abdichtmasse und mindestens eine Dosierspitze, aus der die Abdichtmasse über dem Ringspalt austritt, wobei die Dosierspitze eine Länge von 2 bis 20 cm und einen Durchmesser an der Austrittsöffnung im Bereich von 1 bis 10 mm aufweist und an ihrem an das Leitungssystem angeschlossenen Ende ein Rückschlagventil aufweist.

12. Vorrichtung nach Anspruch 11, **dadurch gekennzeichnet, dass** das Rückschlagventil einstellbar ist.

13. Vorrichtung nach einem oder beiden der Ansprüche 11 und 12, **dadurch gekennzeichnet, dass** die Dosierspitze in das Rückschlagventil auswechselbar eingesteckt oder eingeschraubt ist.

14. Vorrichtung nach einem oder mehreren der Ansprüche 11 bis 13, **dadurch gekennzeichnet, dass** im Einlauf des Vorratsbehälters und/oder vor der Pumpe mindestens ein Partikelfilter mit einer Porengröße von nicht mehr als 100 µm, vorzugsweise von nicht mehr als 50 µm eingebaut ist.

15. Vorrichtung nach einem oder mehreren der Ansprüche 11 bis 14, **dadurch gekennzeichnet, dass** zumindest der Vorratsbehälter beheizbar ist.

16. Vorrichtung nach einem oder mehreren der Ansprüche 11 bis 14, **dadurch gekennzeichnet, dass** sie auf einem Kohlefüllwagen montiert ist, der mindestens eine Einrichtung zum maschinellen Eindrehen des Fülllochdeckels aufweist.

17. Vorrichtung nach Anspruch 16, **dadurch gekennzeichnet, dass** eine Steuereinrichtung mit einem elektrischen Leitungssystem vorhanden ist, die durch das Leitungssystem einerseits Steuersignale zum Eindrehen des Fülllochdeckels und andererseits Steuersignale an die Pumpe zum Fördern der Abdichtmasse gibt.

## Claims

1. Method for sealing a coke oven charging hole closed with a lid, wherein the annular gap between the lid and a charging hole frame is sealed by pouring a sealing compound which cures after the pouring operation, and wherein a previously determined quantity of sealing compound is removed from a storage tank and is poured into the annular gap with the aid of a metering device, **characterized in that** the metering device has a metering tip which is positioned over a selected position of the annular gap and which remains at this selected location during the pouring of the sealing compound, and **in that** the pouring of the sealing compound takes place at the same time as the screwing in of the lid, wherein the sealing compound is distributed over the annular gap by the rotation of the lid, and wherein the sealing compound contains water, truly or colloidally dissolved silicates and dissolved or colloidally dispersed organic polymers and has a viscosity, measured according to Brookfield using spindle No. 2 at 30 revolutions per minute, in the range from 200 to 5000 mPa·s at 20°C.

2. Method according to Claim 1, **characterized in that** the duration of the pouring of the previously determined quantity of sealing compound into the annular gap is in the range from 5 to 15 seconds.

3. Method according to one or both of Claims 1 and 2, **characterized in that** the previously determined quantity of sealing compound per charging hole is in the range of 100 to 300 ml.

4. Method according to one or more of Claims 1 to 3, **characterized in that** the previously determined quantity of sealing compound is removed from the storage tank with the aid of a controlled pump and is delivered to the metering tip through a line system, wherein a non-return valve is provided between the pump and the metering tip.

5. Method according to Claim 4, **characterized in that** the start signal for metering is sent to the pump 1 to 6 seconds, preferably 3 to 4 seconds, before the time at which the screwing in of the charging hole lid begins.

6. Method according to one or both of Claims 4 and 5, **characterized in that** in each case at least one metering tip is provided for each charging hole of the coke oven.

7. Method according to one or more of Claims 1 to 6, **characterized in that** the sealing compound has a density in the range from 1.05 to 1.5 g/cm³ at 20°C.

8. Method according to one or more of Claims 1 to 7, **characterized in that** the sealing compound has a viscosity, measured according to Brookfield using spindle No. 2 at 30 revolutions per minute, in the from 300 to 3000 mPa·s at 20°C.

9. Method according to one or more of Claims 1 to 8, **characterized in that** the sealing compound contains substantially no particles of such a size that they can pass through a 100 µm filter.

10. Method according to Claim 9, **characterized in that** a particle filter is provided at the inlet of the storage tank and/or upstream of the pump.

11. Apparatus for carrying out the method according to one or more of Claims 1 to 10, containing a storage tank for the sealing compound, at least one pump and a line system for delivering the sealing compound, and at least one metering tip from which the sealing compound emerges over the annular gap, wherein the metering tip has a length of 2 to 20 cm and a diameter at the outlet opening in the range from 1 to 10 mm, and has a non-return valve at its end attached to the line system.

12. Apparatus according to Claim 11, **characterized in that** the non-return valve is adjustable.

13. Apparatus according to one or both of Claims 11 and 12, **characterized in that** the metering tip is interchangeably plugged or screwed into the non-return valve.

14. Apparatus according to one or more of Claims 11 to 13, **characterized in that** at least one particle filter having a pore size of no more than 100 µm, preferably no more than 50 µm, is installed at the inlet of the storage tank and/or upstream of the pump.

15. Apparatus according to one or more of Claims 11 to 14, **characterized in that** at least the storage tank is heatable.

16. Apparatus according to one or more of Claims 11 to 14, **characterized in that** it is mounted on a coal charging carriage which has at least one device for mechanically screwing in the charging hole lid.

17. Apparatus according to Claim 16, **characterized by** the provision of a control device having an electric line system, the control device sending control signals for screwing in the charging hole lid, on the one hand, and control signals to the pump for delivering the sealing compound, on the other hand, through the line system.

## Revendications

1. Procédé pour étanchéifier un trou de remplissage d'un four à coke fermé par un couvercle, dans lequel on coule dans la fente annulaire entre le couvercle et un cadre du trou de remplissage une masse d'étanchéité, qui durcit après l'opération de coulée, et dans lequel on prélève d'un réservoir de stockage une quantité préalablement fixée de masse d'étanchéité et on la coule dans la fente annulaire au moyen d'un dispositif de dosage, **caractérisé en ce que** le dispositif de dosage présente une pointe de dosage, qui est positionnée au-dessus d'un point choisi de la fente annulaire et qui reste en ce point choisi pendant la coulée de la masse d'étanchéité, et **en ce que** l'on effectue la coulée de la masse d'étanchéité en même temps que la rotation du couvercle, dans lequel on répartit la masse d'étanchéité sur la fente annulaire par la rotation du couvercle, et dans lequel la masse d'étanchéité contient de l'eau, des silicates dissous tels quels ou sous forme colloïdale ainsi que des polymères organiques dissous ou dispersés sous forme colloïdale et présente à 20°C une viscosité, mesurée selon Brookfield avec une broche n° 2 à 30 tours par minute, comprise dans la plage de 200 à 5000 mPa·s.

2. Procédé selon la revendication 1, **caractérisé en ce que** la durée de la coulée de la quantité préalablement fixée de masse d'étanchéité dans la fente annulaire se situe dans la plage de 5 à 15 secondes.

3. Procédé selon une ou les deux des revendications 1 et 2, **caractérisé en ce que** la quantité préalablement fixée de masse d'étanchéité par trou de remplissage se situe dans la plage de 100 à 300 ml.

4. Procédé selon une ou plusieurs des revendications 1 à 3, **caractérisé en ce que** l'on prélève la quantité préalablement fixée de masse d'étanchéité du réservoir de stockage à l'aide d'une pompe commandée et on la transporte jusqu'à la pointe de dosage par un système de conduites, dans lequel il est prévu un clapet anti-retour entre la pompe et la pointe de dosage.

5. Procédé selon la revendication 4, **caractérisé en ce que** l'on envoie à la pompe le signal de démarrage pour le dosage 1 à 6 secondes, de préférence 3 à 4 secondes, avant l'instant auquel la rotation du couvercle du trou de remplissage commence.

6. Procédé selon une ou les deux des revendications 4 et 5, **caractérisé en ce qu'**il est prévu respectivement au moins une pointe de dosage pour chaque trou de remplissage du four à coke.

7. Procédé selon une ou plusieurs des revendications 1 à 6, **caractérisé en ce que** la masse d'étanchéité présente à 20°C une densité comprise dans la plage de 1,05 à 1,5 g/cm³.

8. Procédé selon une ou plusieurs des revendications 1 à 7, **caractérisé en ce que** la masse d'étanchéité présente à 20°C une viscosité, mesurée selon Brookfield avec une broche n° 2 à 30 tours par minute, comprise dans la plage de 300 à 3000 mPa·s.

9. Procédé selon une ou plusieurs des revendications 1 à 8, **caractérisé en ce que** la masse d'étanchéité ne contient essentiellement pas de particules d'une taille telle qu'elles puissent passer à travers un filtre de 100 µm.

10. Procédé selon la revendication 9, **caractérisé en ce qu'**il est prévu un filtre à particules dans l'entrée du réservoir de stockage et/ou avant la pompe.

11. Dispositif pour la mise en oeuvre du procédé selon une ou plusieurs des revendications 1 à 10, contenant un réservoir de stockage pour la masse d'étanchéité, au moins une pompe et un système de conduites pour le transport de la masse d'étanchéité et au moins une pointe de dosage, hors de laquelle la masse d'étanchéité sort au-dessus de la fente annulaire, dans lequel la pointe de dosage présente une longueur de 2 à 20 cm et un diamètre à l'orifice de sortie compris dans la plage de 1 à 10 mm, et présente un clapet anti-retour à son extrémité raccordée au système de conduites.

12. Dispositif selon la revendication 11, **caractérisé en ce que** le clapet anti-retour est réglable.

13. Dispositif selon une ou les deux des revendications 11 et 12, **caractérisé en ce que** la pointe de dosage est engagée ou vissée de façon remplaçable dans le clapet anti-retour.

14. Dispositif selon une ou plusieurs des revendications 11 à 13, **caractérisé en ce qu'**au moins un filtre à particules avec une taille de pores non supérieure à 100 µm, de préférence non supérieure à 50 µm, est incorporé dans l'entrée du réservoir de stockage et/ou avant la pompe.

15. Dispositif selon une ou plusieurs des revendications 11 à 14, **caractérisé en ce qu'**au moins le réservoir de stockage peut être chauffé.

16. Dispositif selon une ou plusieurs des revendications 11 à 14, **caractérisé en ce qu'**il est monté sur un wagon de chargement de charbon, qui présente au moins un dispositif pour la rotation mécanique du couvercle du trou de remplissage.

17. Dispositif selon la revendication 16, **caractérisé en ce qu'**il se trouve un dispositif de commande avec un système de lignes électriques, qui envoie par le système de lignes d'une part des signaux de commande pour la rotation du couvercle du trou de remplissage et d'autre part des signaux de commande à la pompe pour le transport de la masse d'étanchéité.
